# EUROPEAN PATENT SPECIFICATION

(11) **EP 2 381 566 B1**
(45) Date of publication and mention of the grant of the patent: **10.05.2017**
(21) Application number: 11155740.1
(22) Date of filing: 24.02.2011
(51) Int. Cl.: H02K 29/08, H02K 7/116, H02K 11/00

(54) **Magnetic Pole Sensor Structure in Assist Unit**
Magnetpolsensorstruktur in Hilfseinheit
Structure de capteur de pôle magnétique dans une unité d'assistance

(30) Priority: 30.03.2010 JP 2010077601
(43) Date of publication of application: 26.10.2011
(73) Proprietor: Honda Motor Co., Ltd., Tokyo 107-8556 (JP)
(72) Inventor: Kuroki, Masahiro, Saitama 351-0193 (JP); Kobayashi, Naoki, Saitama 351-0193 (JP)
(74) Representative: Beder, Jens

(56) References cited:
- EP-A1- 1 560 314
- WO-A1-97/18119
- JP-A- 9 117 098
- US-A1- 2007 194 649

## Description

The present invention relates to a magnetic pole sensor structure for the assist unit to be mounted on a power-assisted bicycle.

Among conventional known power-assisted bicycles is one which has an assist unit, a motor which is mounted on the casing of the assist unit, a pinion gear which is attached to the shaft of the motor so that it transmits the driving force of the motor to the rear wheel of the power-assisted bicycle through the assist unit, and magnetic pole sensor means to detect the angle of rotation of the rotor, said sensor means being arranged between the pinion gear and the rotor (see Patent Document 1 and Patent Document 2 listed below, for example).

The power-assisted bicycle disclosed in Patent Document 1 is constructed such that the motor shaft has a small pulley attached thereto which provides the driving force for power assisting and the small pulley and the rotor hold between them a Hall element as the magnetic pole sensor means.

[Patent Document 1]
   Japanese Patent Laid-open No. 2002-220079
[Patent Document 2]
   Japanese Patent Laid-open No. JP9117098 (Honda Motor Co Ltd)

However, if it is desirable to increase the output (torque) of the motor so as to increase the assist ratio (between the driving power due to pedal pressing force and the driving power due to motor driving force), thereby helping more the rider, the assist unit requires that the tooth surface of the small pulley be extended so that it effectively receives (or transmits) a large torque.

Unfortunately, this requirement is not met easily on account of limitations in the length of the motor in the axial direction. Thus a new technology is required to realize the structure for effective transmission of a large torque without increasing the size of the motor.

For space saving, it is necessary that the magnetic pole sensor means be arranged in a limited space between the small pulley and the rotor. Moreover, in view of the fact that the drive mechanism including gears essentially requires lubricant such as grease, the foregoing structure needs consideration for the effect of lubricant on the magnetic pole sensor means and the accuracy of detection by the magnetic pole sensor means.

It is an object of the present invention to provide a magnetic pole sensor structure in the assist unit which permits the tooth surface of the pinion gear attached to the motor shaft to extend, with the motor shaft remaining unchanged in length, even when the assist motor increases in output (torque).

The first aspect of the present invention is directed to the magnetic pole sensor structure in the assist unit such as the assist unit mounted on the power-assisted bicycle, the assist unit having the unit casing, the brushless motor placed in the unit casing, the pinion gear which attaches itself to the motor shaft of the brushless motor so as to transmit the driving force of the brushless motor to the rear wheel of the power-assisted bicycle through the assist unit, the magnetic pole sensor means attached to the motor shaft of the brushless motor to detect the angle of rotation of the rotor of the brushless motor, and the driver means to control current flowing into the brushless motor according to the angle of rotation of the rotor which has been detected by the magnetic pole sensor means, with the magnetic pole sensor means being arranged between the pinion gear and the rotor, wherein the magnetic pole sensor means has the magnetic pole magnet which rotates integrally with the rotor and the sensor which detects the rotation of the magnetic pole magnet, the magnetic pole magnet has the magnetic pole magnet proper, the magnet attached to the magnetic pole magnet proper, the extending part which extends from the magnetic pole magnet proper toward the tooth surface of the pinion gear, and the seal means which is in contact with the periphery in the radial direction of the extending part, the sensor faces the magnet from the outside in the radial direction of the magnetic pole magnet, and the magnetic pole sensor means is arranged such that the magnetic pole magnet proper and the seal means are close to each other in the axial direction of the motor shaft.

The second aspect of the present invention is directed to the magnetic pole sensor structure in the assist unit as defined in the first aspect, wherein the motor shaft is supported at two points such that one end is supported by the motor yoke to hold the stator of the brushless motor, with the bearing interposed between them, and the other end is supported by the unit casing at the position of the outer end of the pinion gear.

The third aspect of the present invention is directed to the magnetic pole sensor structure in the assist unit as defined in the first aspect, wherein the extending part is formed in a cylindrical shape smaller in diameter than the magnetic pole magnet proper and the seal means is arranged within the range smaller in diameter than the magnet.

The fourth aspect of the present invention is directed to the magnetic pole sensor structure in the assist unit as defined in the first aspect, wherein the magnetic pole magnet is in contact with the rotor at the opposite side of the extending part.

According to the first aspect of the present invention, the magnetic pole magnet has the extending part which extends from the magnetic pole magnet proper toward the tooth surface of the pinion gear and the seal means which is in contact with the periphery in the axial direction of the extending part. This structure permits the tooth surface of the pinion gear to extend without the motor shaft increasing in length and also permits the magnetic pole sensor to maintain a high detecting accuracy without being affected by the lubricant (such as grease) applied to parts meshing with the pinion gear.

According to the first aspect of the present invention, the sensor faces the magnet from the outside in the radial direction of the magnetic pole magnet. This structure allows a high degree of freedom for design even though the magnetic pole magnet proper and the seal means are arranged in contact with each other. This contributes to the effective use of space for the magnetic pole sensor.

As mentioned above, according to the first aspect of the present invention, the magnetic pole sensor structure permits the tooth surface of the pinion gear attached to the motor shaft to extend, with the motor shaft remaining unchanged in length, even when the assist motor increases in output (torque).

According to the second aspect of the present invention, the motor shaft is supported at two points at both ends thereof. This structure permits the supporting span of the motor shaft to extend and the assist motor to produce a higher output (or a higher torque). Moreover, this structure obviates the necessity of arranging a bearing at the center of the motor shaft. This allows a high degree of freedom for the design of the magnetic pole magnet proper and the seal means in the magnetic pole sensor means. The result is that the tooth surface of the pinion gear can be extended.

According to the third aspect of the present invention, the extending part is formed in a cylindrical shape smaller in diameter than the magnetic pole magnet proper and the seal means is arranged within the range smaller in diameter than the magnet. This structure makes it unnecessary to enlarge the extending part and the motor shaft in the radial direction in the seal means.

According to the fourth aspect of the present invention, the magnetic pole magnet is in contact with the rotor at the opposite side of the extending part. Owing to this structure, the magnetic pole magnet prevents the rotor from moving in the thrust direction of the motor shaft. This obviates the necessity of providing the rotor with an additional thrust retainer.

Fig. 1 is a side view of the power-assisted bicycle pertaining to one embodiment of the present invention.
Fig. 2 is an enlarged side view showing the important parts of the magnetic pole sensor structure pertaining to the embodiment.
Fig. 3 is a diagram, with special emphasis placed on the constitution relating to the drive force as shown in Fig. 2.
Fig. 4 is a sectional view taken along the line that crosses the pedal crankshaft, motor shaft, output shaft, and idler shaft in the magnetic pole sensor structure pertaining to the embodiment.
Fig. 5 is a sectional view taken along the line that crosses the control board for driver and the control board for controller in the magnetic pole sensor structure pertaining to the embodiment.
Fig. 6 is a perspective view (seen from outside) of the left casing of the assist unit.
Fig. 7 is a perspective view (seen from inside) of the left casing of the assist unit.
Fig. 8 is a perspective view (seen from outside) of the right casing of the assist unit.
Fig. 9 is a perspective view (seen from inside) of the right casing of the assist unit.
Fig. 10 is a diagram, with special emphasis placed on the constitution relating to the control board as shown in Fig. 2.
Fig. 11 is a perspective view (seen from outside) of the yoke of the brushless motor.
Fig. 12 is a perspective view (seen from inside) of the yoke of the brushless motor.
Fig. 13 is a partly enlarged view showing the periphery of the pedal crankshaft 17 in the magnetic pole sensor structure as shown in Fig. 4.
Fig. 14 is a partly enlarged view showing the periphery of the brushless motor 15 in the magnetic pole sensor structure as shown in Fig. 4.
Fig. 15 is a partly enlarged view of one part of the diagram shown in Fig. 14.
Fig. 16 is a partly enlarged view showing the periphery of the output shaft in the magnetic pole sensor structure as shown in Fig. 4.
Fig. 17 is a partly enlarged sectional view showing the left casing 52, with the yoke 75 and the stator 85 removed therefrom.
Fig. 18 is a left side view of the motor placement part 523 of the left casing 52.

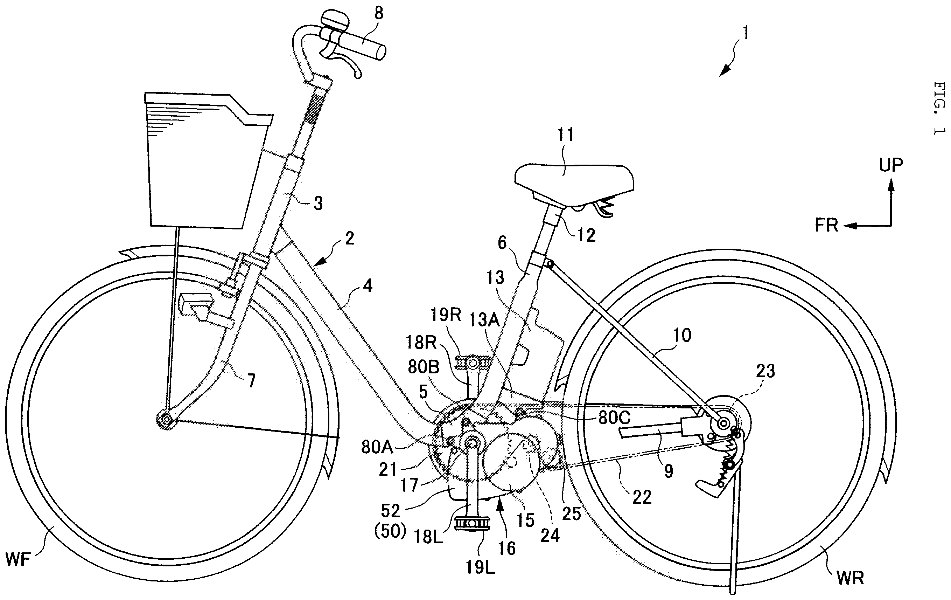

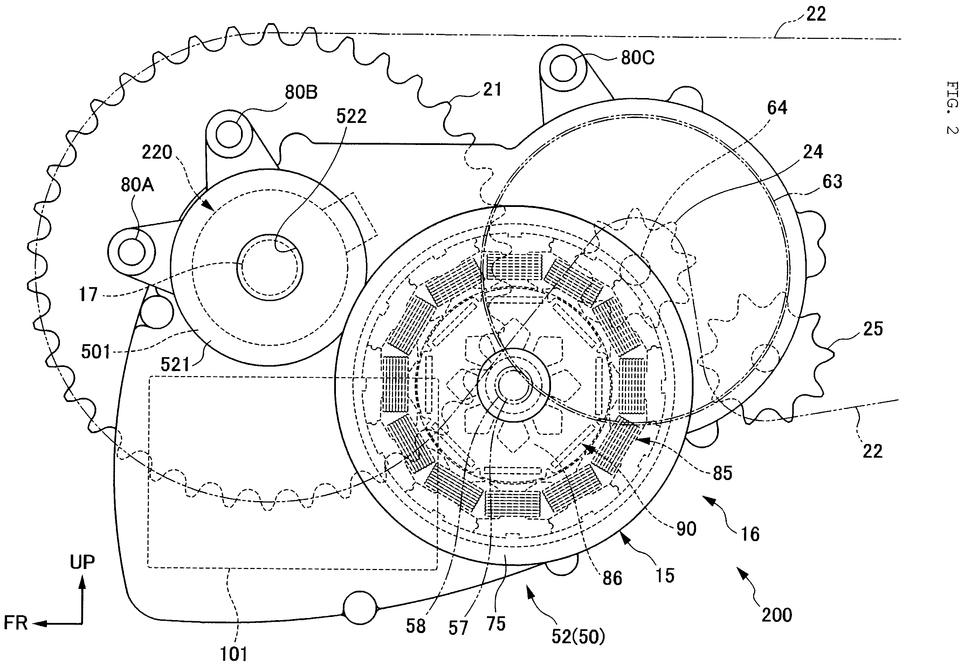

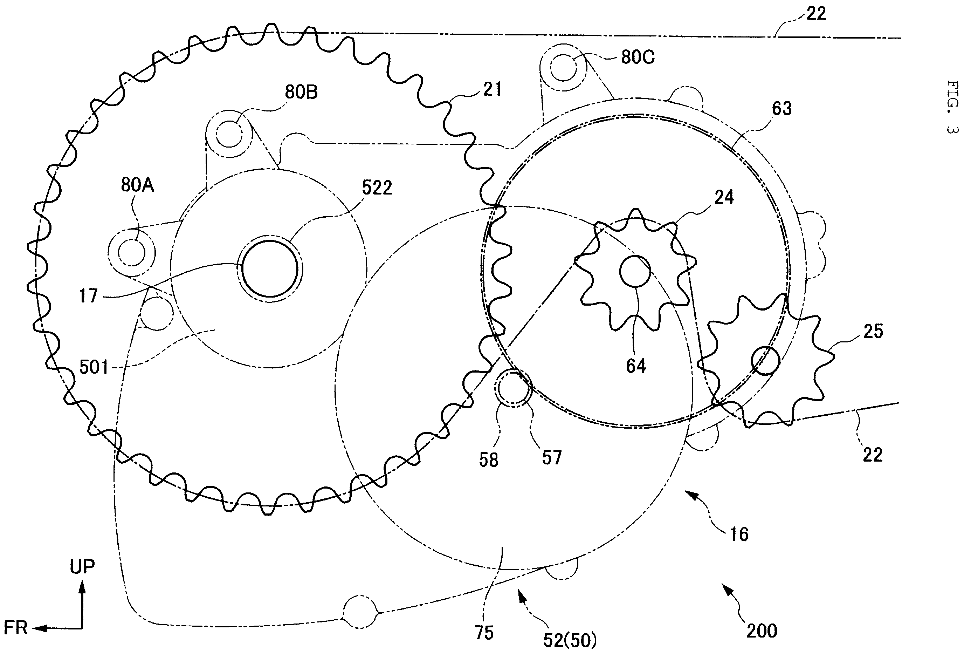

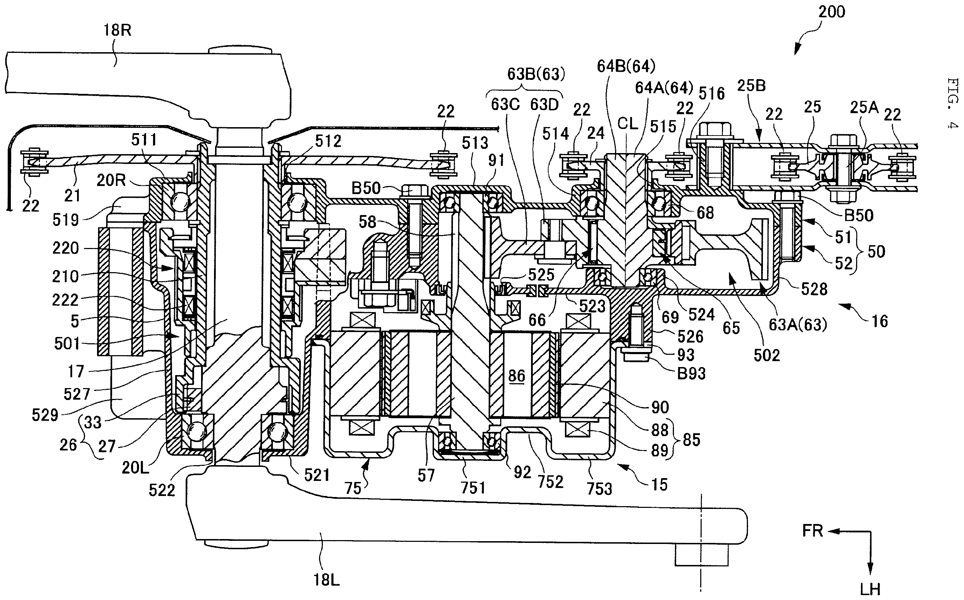

A detailed description of the preferred embodiments of the present invention will be given below with reference to the accompanying drawings. The power-assisted bicycle 1 pertaining to the present invention will be outlined first with reference to Figs. 1 to 4. Fig. 1 is a side view of the power-assisted bicycle pertaining to one embodiment of the present invention. Fig. 2 is an enlarged side view showing the important parts of the magnetic pole sensor structure pertaining to the embodiment. Fig. 3 is a diagram, with special emphasis placed on the constitution relating to the drive force as shown in Fig. 2. Fig. 4 is a sectional view taken along the line that crosses the pedal crankshaft, motor shaft, output shaft, and idler shaft in the magnetic pole sensor structure pertaining to the embodiment.

Incidentally, the directions (forward and backward, right and left, and up and down) used in the following description should accord with those viewed by the bicycle rider, unless otherwise mentioned. In addition, the arrows FR, LH, and UP in the drawings denote respectively the front direction, lefthand direction, and upward direction of the bicycle.

As shown in Fig. 1, the power-assisted bicycle 1 is composed mainly of a body frame 2, a front fork 7, a steering handle 8, a rear fork 9, a front wheel WF, a rear wheel WR, a stay 10, a seat post 12, a battery 13, a brushless motor 15, an assist unit 16, a pedal crankshaft 17, cranks 18L and 18R, pedals 19L and 19R, a drive sprocket 21, a chain 22, a driven sprocket 23, an assist sprocket 24 (as the output shaft sprocket), and an idler 25.

The body frame 2 is composed of a head pipe 3 which is positioned at the front part of the body frame 2 and which extends upward and downward, a down pipe 4 which extends backward and downward from the head pipe 3, a supporting member 5 which is fixed to the rear end of the down pipe 4, and a seat pipe 6 which rises upward from the supporting member 5.

The front fork 7 extends downward and is handleably supported by the head pipe 3. The front wheel WF is pivotally supported by the lower end of the front fork 7. The steering handle 8 is integrally connected to the upper part of the front fork 7. The steering handle 8 steers the front wheel WF pivotally supported by the front fork 7.

The rear fork 9 is composed of paired right and left parts, which are integrally formed with the supporting member 5 and which extend from the supporting member 5 straight backward and almost parallel to the ground. The rear wheel WR is pivotally supported between the rear ends of the paired right and left parts of the rear fork 9. The rear wheel WR functions as the drive wheel. The stay 10 is composed of paired right and left parts, which are arranged between the upper part of the seat pipe 6 and the rear part of the rear fork 9.

The seat post 12 is provided with a seat 11 on the top thereof, and it is fitted into the seat pipe 6 such that it permits the seat 11 to be adjusted for its vertical position. The battery 13 is arranged behind the seat pipe 6 and is supported at its lower part by a battery supporting member 13A connected to the rear part of the seat pipe 6.

The assist unit 16 is joined to the body frame 2. The assist unit 16 has functions to pivotally support the pedal crankshaft 17 so that the pedal crankshaft 17 rotates freely and to support the brushless motor 15. The assist unit 16 is joined to the body frame 2 by three hanger parts 80A, 80B, and 80C. To be more specific, the front hanger parts 80A and 80B are used to join the assist unit 16 to the supporting member 5, and the rear hanger part 80C is used to join the assist unit 16 to the battery supporting member 13A.

The brushless motor 15 is supplied with electric power from the battery 13, and it functions to generate supplementary torque.

As shown in Figs. 1 to 4, the pedal crankshaft 17, receives human power, penetrates through the first space 501 (mentioned later) of the assist unit 16. The pedal crankshaft 17 is pivotally supported (for free rotation) by the unit casing 50 of the assist unit 16 through the crankshaft bearings 20R and 20L.

The cranks 18L and 18R are fixedly joined to the left and right ends of the pedal crankshaft 17, respectively. The pedals 19L and 19R are rotatably attached respectively to the forward ends of the cranks 18L and 18R. The crank pedal is comprised of the pedal crankshaft 17, the cranks 18L and 18R, and the pedals 19L and 19R. The power-assisted bicycle 1 is designed such that the pedaling force of the rider is transmitted to the pedal crankshaft 17 through the pedals 19L and 19R and the cranks 18L and 18R. Thus the rider can rotate the pedal crankshaft 17.

The drive sprocket 21 is joined to the pedal crankshaft 17 through the externally fitting shaft member 210 (mentioned later) which is externally fitted to the pedal crankshaft 17. The drive sprocket 21 rotates as the rotation of the pedal crankshaft 17 is transmitted to it through the externally fitting shaft member 210. The rotation of the drive sprocket 21 is transmitted through the chain 22 to the driven sprocket 23 which is attached to the rear wheel WR.

The assist sprocket 24 transmits to the chain 22 the supplementary torque generated by the brushless motor 15; it is arranged behind the drive sprocket 21.

The idler 25 helps increase the winding angle of the chain 22 around the assist sprocket 24; it is arranged behind the assist sprocket 24.

Incidentally, although this embodiment is so designed as to transmit the pedaling torque and supplementary torque to the driven sprocket 23 by means of the chain mechanism, it may be modified such that the pedaling torque and supplementary torque are transmitted to the rear wheel WR by means of the belt mechanism.

In what follows the power transmitting mechanism 200 to transmit the pedaling torque and supplementary torque will be described with reference to Figs. 2 to 4 and Figs. 5 to 18. The power transmitting mechanism 200 includes the magnetic pole sensor structure pertaining to this embodiment.

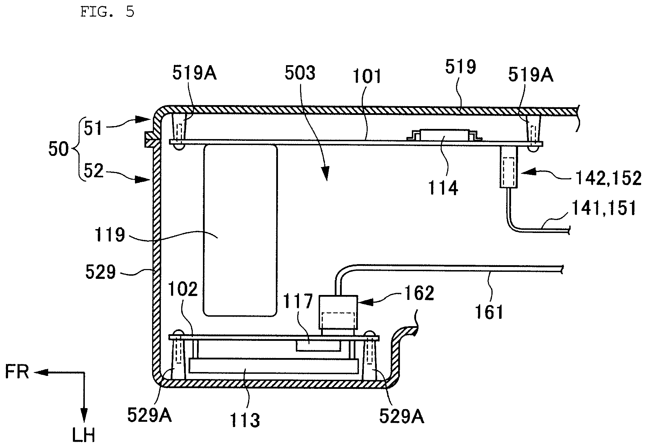

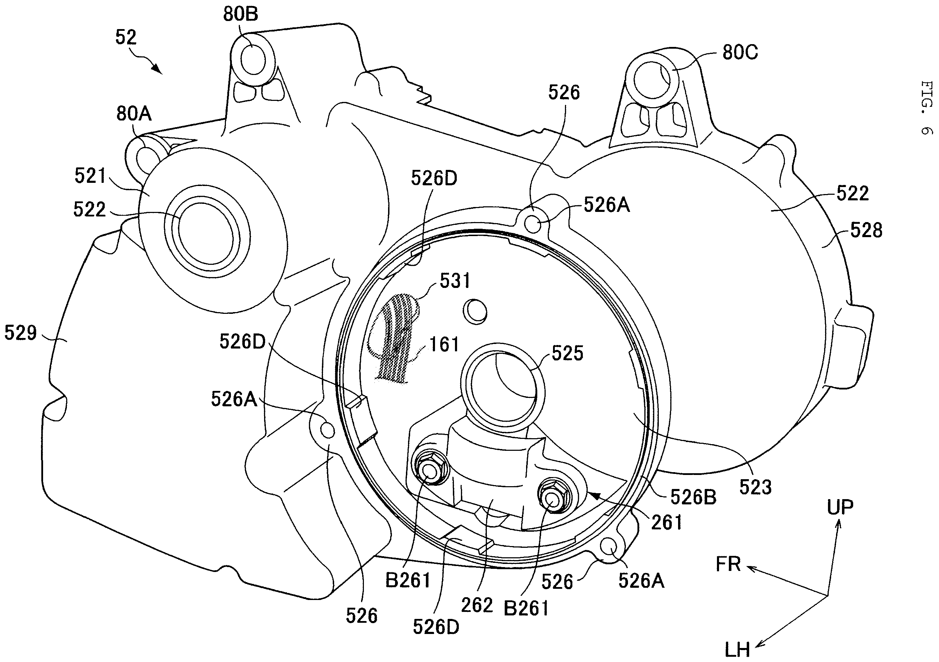

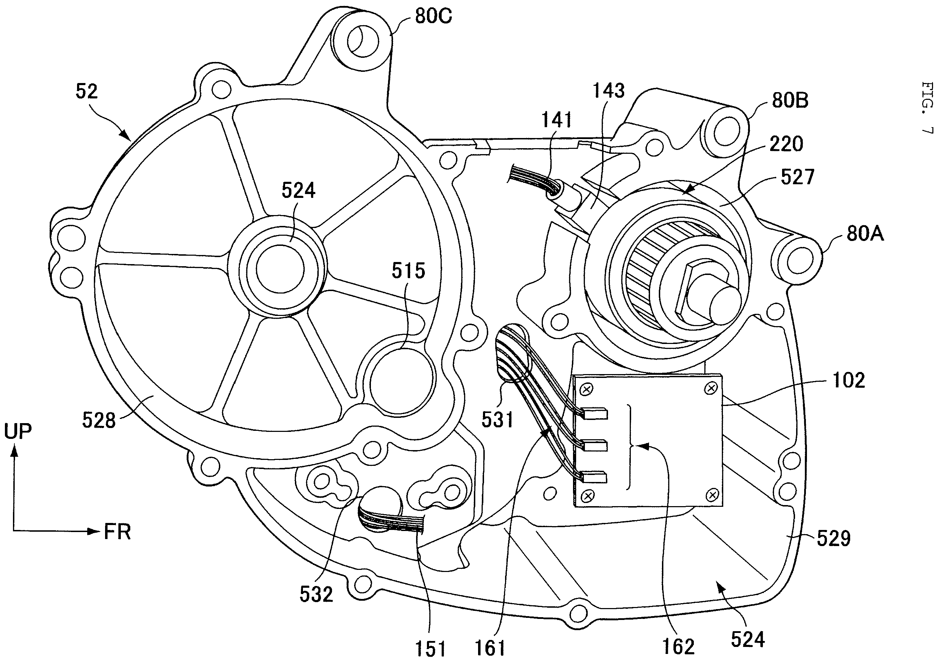

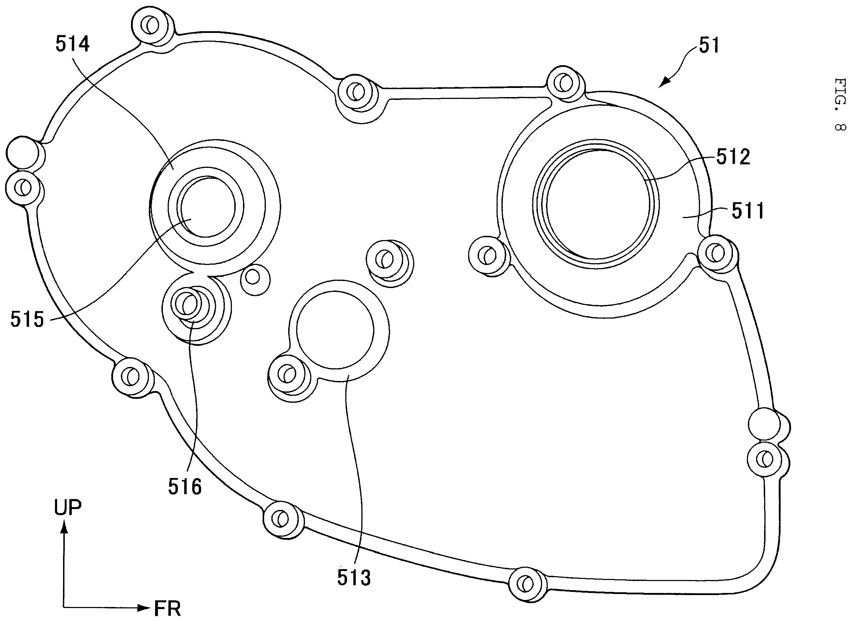

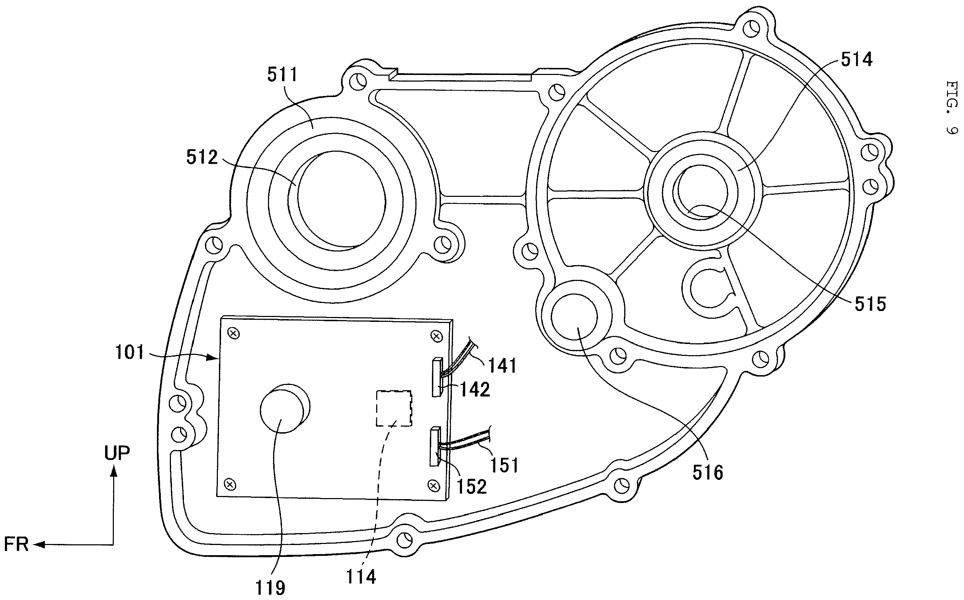

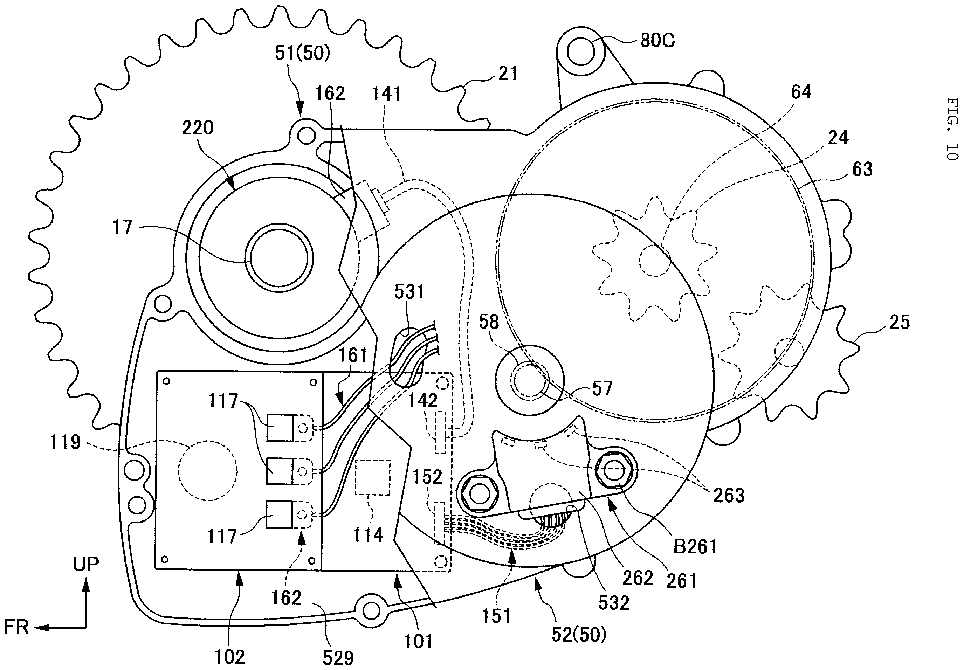

Fig. 5 is a sectional view taken along the line that crosses the control board for driver and the control board for controller in the magnetic pole sensor structure pertaining to the embodiment. Fig. 6 is a perspective view (seen from outside) of the left casing of the assist unit. Fig. 7 is a perspective view (seen from inside) of the left casing of the assist unit. Fig. 8 is a perspective view (seen from outside) of the right casing of the assist unit. Fig. 9 is a perspective view (seen from inside) of the right casing of the assist unit. Fig. 10 is a diagram, with special emphasis placed on the constitution relating to the control board as shown in Fig. 2.

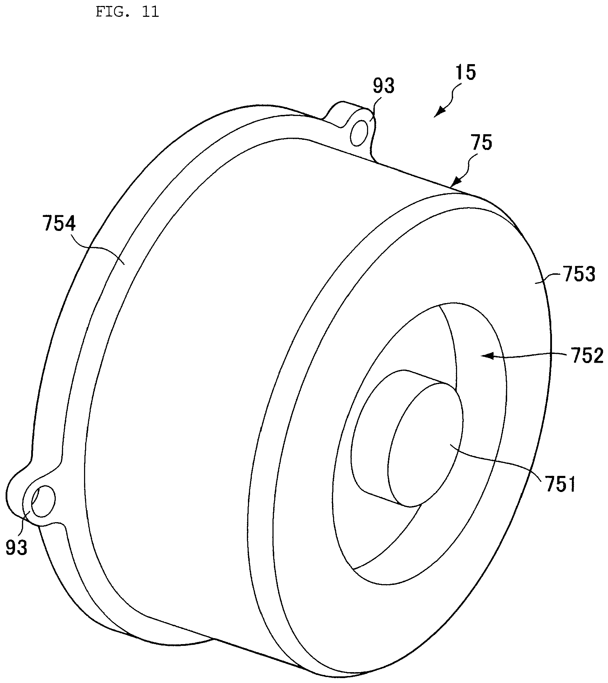

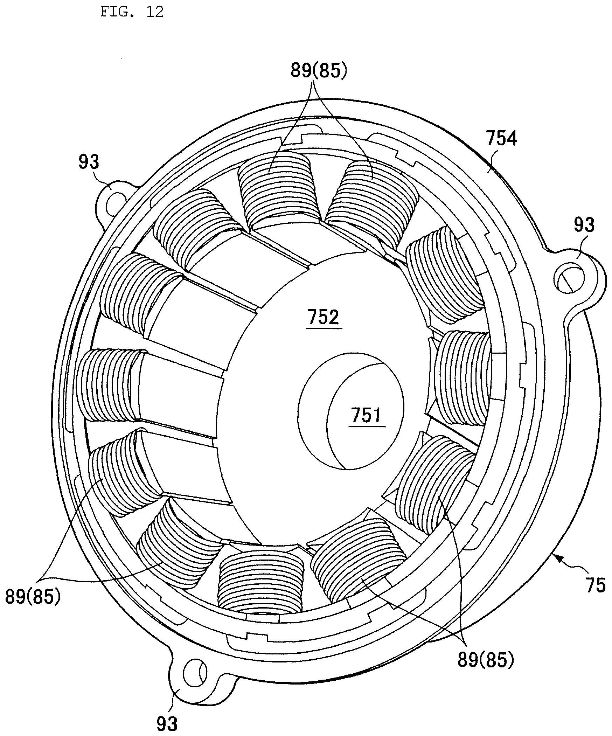

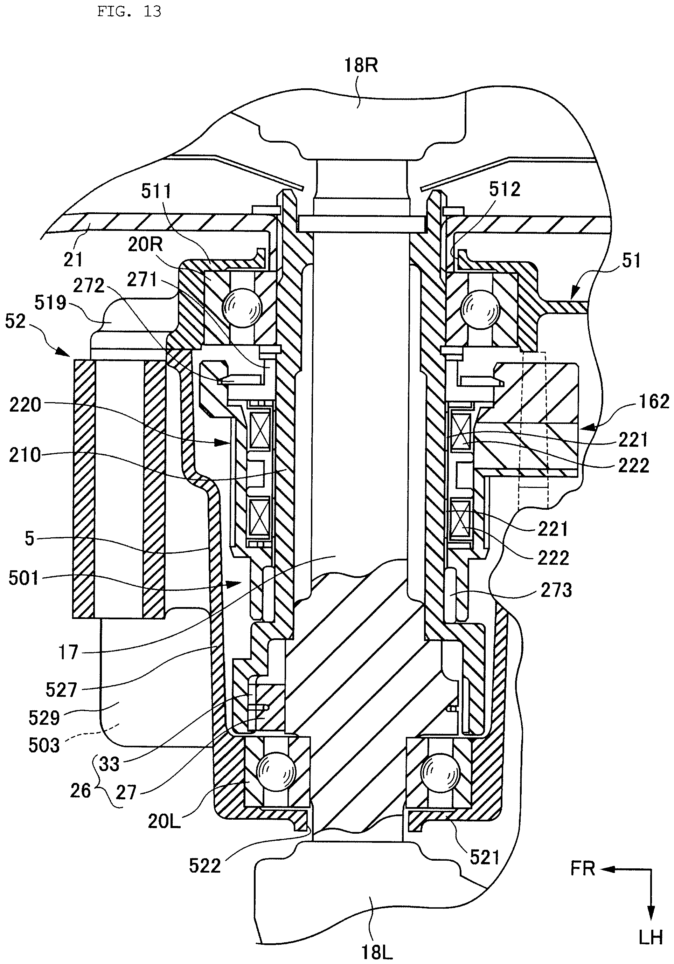

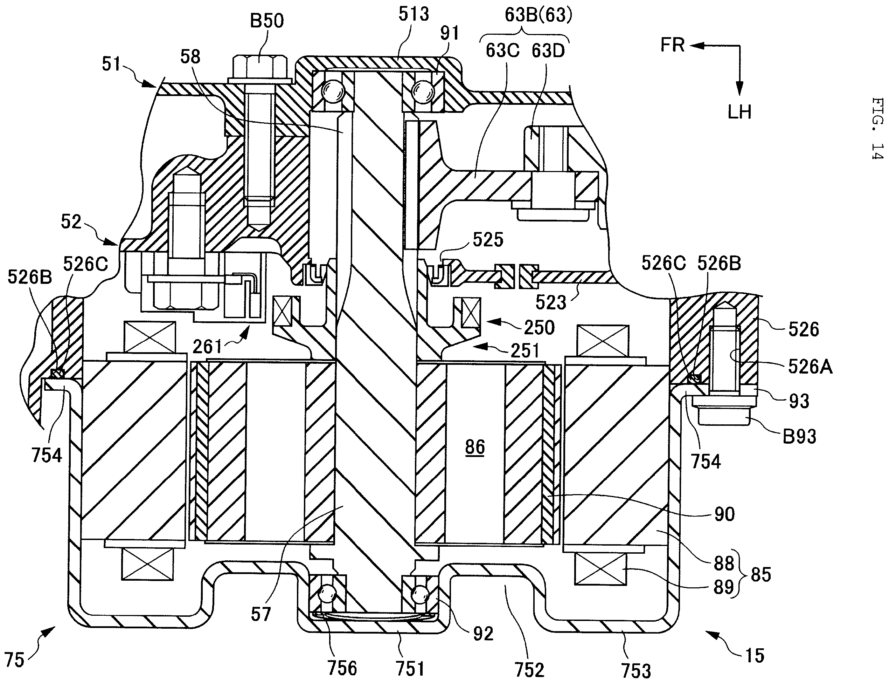

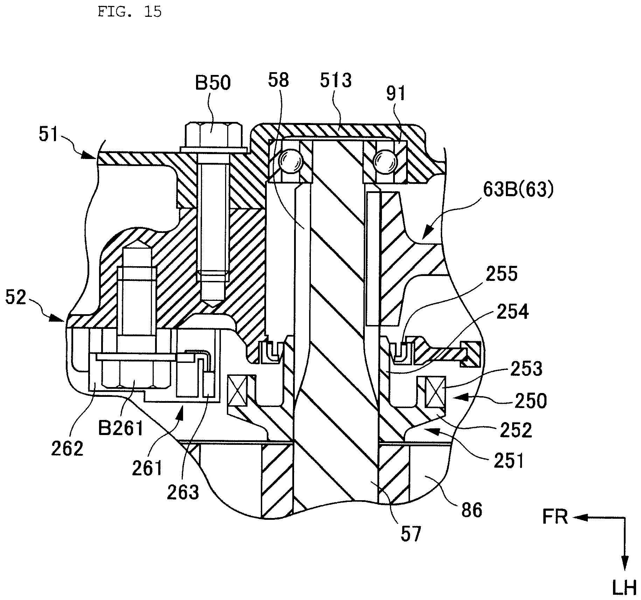

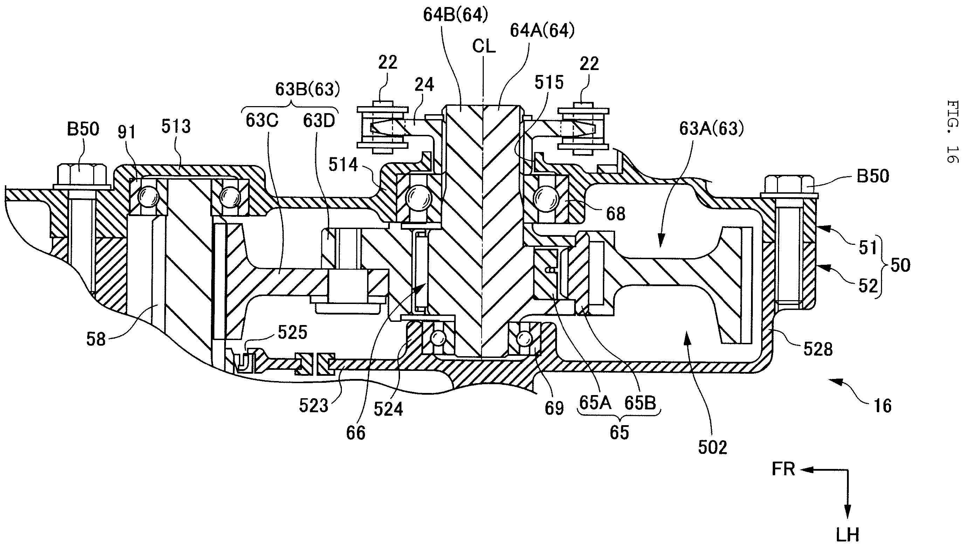

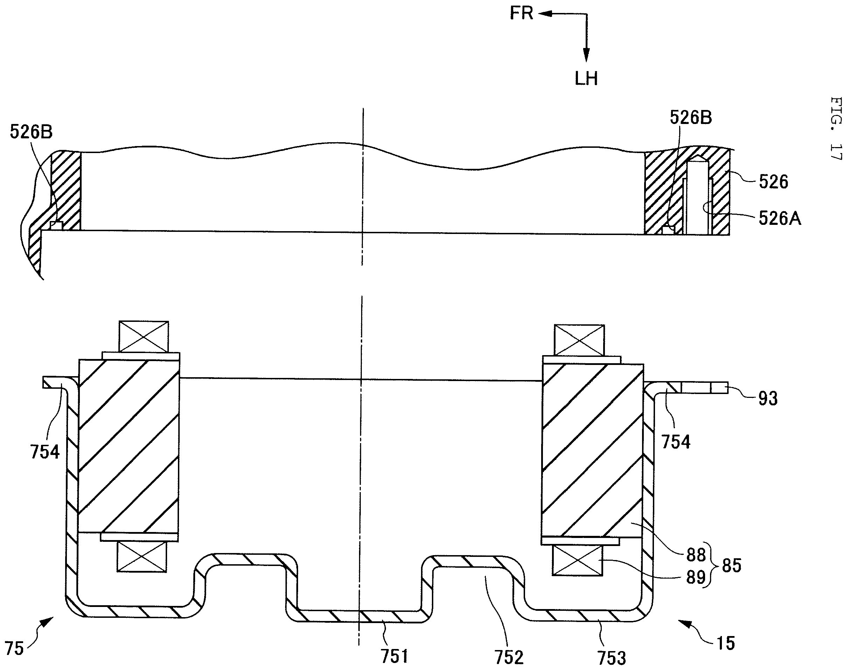

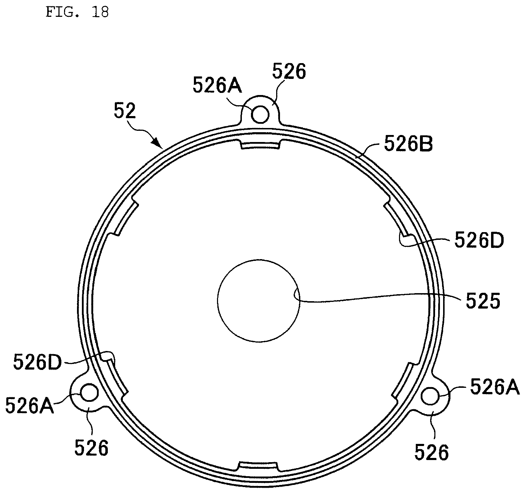

Fig. 11 is a perspective view (seen from outside) of the yoke of the brushless motor. Fig. 12 is a perspective view (seen from inside) of the yoke of the brushless motor. Fig. 13 is a partly enlarged view showing the periphery of the pedal crankshaft 17 in the magnetic pole sensor structure as shown in Fig. 4. Fig. 14 is a partly enlarged view showing the periphery of the brushless motor 15 in the magnetic pole sensor structure as shown in Fig. 4. Fig. 15 is a partly enlarged view of one part of the diagram shown in Fig. 14. Fig. 16 is a partly enlarged view showing the periphery of the output shaft in the magnetic pole sensor structure as shown in Fig. 4. Fig. 17 is a partly enlarged sectional view showing the left casing 52, with the yoke 75 and the stator 85 removed therefrom. Fig. 18 is a left side view of the motor placement part 523 of the left casing 52.

As shown in Figs. 2 to 12, the power transmitting mechanism 200 is composed of the assist unit 16 which has the unit casing 50 including the right casing 51 and the left casing 52, the brushless motor 15 arranged in the left casing 52, and the pinion gear 58 attached to the motor shaft 57 of the brushless motor 15. The assist unit 16 is composed of the reducing driven gear 63 which meshes with the pinion gear 58, the output shaft 64 which is joined to the reducing driven gear 63 and outputs the driving force from the pinion gear 58, and the assist sprocket 24 which is joined to the output shaft 64 and meshes with the chain 22 of the power-assisted bicycle 1.

The power transmitting mechanism 200 transmits the driving force of the brushless motor 15 to the rear wheel WR of the power-assisted bicycle 1 through the pinion gear 58, the assist unit 16 (including the reducing driven gear 63, the output shaft 64, and the assist sprocket 24), and the chain 22.

The power transmitting mechanism 200 has main functions to rotatably support the pedal crankshaft 17, to support the brushless motor 15, to reduce the rotation generated by the brushless motor 15, thereby causing the assist sprocket 24 to generate supplementary torque, and to rotatably support the idler 25.

The power transmitting mechanism 200 is enclosed by an outer shell which is composed of the unit casing 50 having the right casing 51 and the left casing 52 and the yoke 75 of the brushless motor 15.

The following is a description of the unit casing 50 having the right casing 51 and the left casing 52.

The right casing 51 constitutes the right side of the unit casing 50, and the left casing 52 constitutes the left side of the unit casing 50. The left casing 52 forms a large portion of the accommodation space of the unit casing 50.

As shown in Figs. 4 and 5, the right casing 51 and the left casing 52 are mated together so that they form between them the first accommodation space 501 for accommodation of the pedal crankshaft 17 and others, the second accommodation space 502 for accommodation of the output shaft 64, the reducing driven gear 63, etc., and the third accommodation space 503 for accommodation of the first control board 101, the second control board 102, etc. While the right casing 51 and the left casing 52 are mated together in the above-mentioned state, they are firmly joined together by tightening the bolt B50 which penetrates through the hole formed in the right casing 51 and fits into the female screw formed in the left casing 52.

As shown in Figs. 4 to 7, the left casing 52 is composed of the first bearing retaining part 521, the pedal crankshaft penetrating hole 522, the motor placement part 523, the motor shaft penetrating hole 525, the third bearing retaining part 524, the motor fixing part 526, the first accommodation space forming part 527, the second accommodation space forming part 528, and the third accommodation space forming part 529.

The first bearing retaining part 521 is the part in which the crankshaft bearing 20L is retained. The crankshaft bearing 20L is a ball bearing; it rotatably supports the pedal crankshaft 17 on the left casing 52 in the neighborhood of its left end.

The pedal crankshaft penetrating hole 522 has a hole through which the pedal crankshaft 17 penetrates in the neighborhood of its left end; it is so mounted as to penetrate the first bearing retaining part 521 in its right and left directions.

The motor placement part 523 is positioned at the left side of the left casing 52; it holds therein the brushless motor 15.

The motor shaft penetrating hole 525 is a hole through which the motor shaft 57 penetrates; it is so mounted as to penetrate the motor placement part 523 in the right and left directions.

The third bearing retaining part 524 is a part in which the output bearing 69 is retained. The output bearing 69 is a ball bearing which rotatably supports the output shaft 64 on the left casing 52 in the neighborhood of the left end.

The motor fixing part 526 is a part which fixes the brushless motor 15 to the left casing 52; it has formed therein a motor fixing female screw 526A (shown in Fig. 14), an annular recess 526B (shown in Figs. 6 and 14), and fitting contacts 526D (shown in Figs. 6 and 18). The annular recess 526B is so formed as to sink in the right direction on the left side of the motor fixing part 526; it extends annularly. The flange 754 (mentioned later) of the yoke 75 of the brushless motor 15 comes into contact with the right end surface of the motor fixing part 526, with the O-ring 526C inserted into the annular recess 526B.

The fitting contacts 526D are formed on the internal peripheral surface of the motor placement part 523; there are six arranged at equal intervals along the periphery. The fitting contacts 526D project from the inner peripheral surface of the motor placement part 523 toward the motor shaft penetrating hole 525 (motor shaft 57). The fitting contacts 526D come into contact with the outer peripheral surface of the stator 85 when the yoke 75 of the brushless motor 15 is fitted (for fixing) into the left casing 52.

The first accommodation space forming part 527 is a part in which the first accommodation space 501 is formed for the left casing 52. It opens toward the right side at the front upper part of the left casing 52.

The second accommodation space forming part 528 is a part in which the second accommodation space 502 is formed for the left casing 52. It opens toward the right side at the rear part of the left casing 52.

The third accommodation space forming part 529 is a part in which the third accommodation space 503 is formed for the left casing 52. It opens toward the right side at the front lower part of the left casing 52.

The following is a description of the right casing 51.

As shown in Figs. 4, 5, 8, and 9, the right casing 51 is composed of the first bearing retaining part 511, the pedal crankshaft penetrating hole 512, the second bearing retaining part 513, the third bearing retaining part 514, the output shaft penetrating hole 515, the idler fixing part 516, the second accommodation space forming part 518, and the third accommodation space forming part 519.

The first bearing retaining part 511 is a part in which the crankshaft bearing 20R is retained. The crankshaft bearing 20R is a ball bearing, which rotatably supports the pedal crankshaft 17 for the right casing 51 in the neighborhood of the right end.

The pedal crankshaft penetrating hole 512 is a hole through which the neighborhood of the right end of the pedal crankshaft 17 penetrates. It is so designed as to permit the first bearing retaining part 511 to penetrate in the right and left directions.

The second bearing retaining part 513 is a part in which the motor shaft bearing 91 is retained. The motor shaft bearing 91 is a ball bearing, which rotatably supports the motor shaft 57 for the right casing 51.

The third bearing retaining part 514 is a part in which the output shaft bearing 68 is retained. The output shaft bearing 68 is a ball bearing, which rotatably supports the output shaft 64 for the right casing 51.

The output shaft penetrating hole 515 is a hole through which the output shaft 64 penetrates. It is provided such that the third bearing retaining part 514 penetrates in the right and left directions.

The idler fixing part 516 is a part which fixes the idler 25 to the right casing 51 through the idler fixing member 25B and the idler shaft 25A. The idler fixing member 25B rotatably supports the idler shaft 25A.

The second accommodation space forming part 518 is a part which forms the second accommodation space 502 for the right casing 51. It opens toward the left side at the rear part of the right casing 51.

The third accommodation space forming part 519 is a part which forms the third accommodation space 503 in the left casing 52. It opens toward the left side at the front lower part of the right casing 51.

The following is a description of the structure for accommodation in the first accommodation space 501.

As shown in Figs. 4 to 9, the first accommodation space 501 holds therein the pedal crankshaft 17, the externally fitting shaft member 210, the torque sensor 220 of magnetic strain type, and the crankshaft bearings 20R and 20L.

One end (left end) of the pedal crankshaft 17 is rotatably supported by the crankshaft bearing 20L for the left casing 52. The right side of that part of the pedal crankshaft 17 to which the crankshaft bearing 20L is attached has the inner ring 27 of the first one-way clutch 26 integrally attached thereto.

The externally fitting shaft member 210 extends (for fitting) over the most part between the crankshaft bearing 20L and the crank 18R of the pedal crankshaft 17. The externally fitting shaft member 210 is rotatably supported by the crankshaft bearing 20R for the right casing 51 in the neighborhood of its right end. The drive sprocket 21 is fixed to the peripheral part of the externally fitting shaft member 210 which projects from the pedal crankshaft penetrating hole 512 of the right casing 51. The outer ring 33 of the first one-way clutch 26 is integrally formed on that part of the internal peripheral part of the externally fitting shaft member 210 which faces the inner ring 27 of the first one-way clutch 26.

The first one-way clutch 26 mentioned above works in the following way. When the rider presses the pedals 19L and 19R so as to turn the pedal crankshaft 17 in normal direction, the pressing force applied to the pedals 19L and 19R is transmitted to the externally fitting shaft member 210. By contrast, when the rider presses the pedals 19L and 19R so as to turn the pedal crankshaft 17 in the reverse direction, or when the rider stops pressing the pedals 19L and 19R during running, the first one-way clutch 26 slips. This permits the reverse rotation of the pedal crankshaft 17 and prevents the torque of the drive sprocket 21 from being transmitted to the pedals 19L and 19R.

The result is that the pressing torque, which is applied to the pedal crankshaft 17 when the rider presses the pedals 19L and 19R, is transmitted to the externally fitting shaft member 210 through the first one-way clutch 26. This pressing torque is transmitted to the drive sprocket 21 and then to the rear wheel WR through the chain 22 and the driven sprocket 23. On the other hand, the supplementary torque applied to the assist sprocket 24 from the assist unit 16 is transmitted to the rear wheel WR through the chain 22 and the driven sprocket 23.

In other words, the externally fitting shaft member 210 is fitted into the pedal crankshaft 17 in such a way that the pedal crankshaft 17 and the drive sprocket 21 rotate together when the first one-way clutch 26 is in the engaged state.

The torque sensor 220 of magnetic strain type is a sensor which is so designed as to detect the pressing torque (torque due to pressing force) applied to the pedal crankshaft 17 in response to the change in magnetic properties which is attributable to magnetic strain. As shown in Figs. 4 and 13, the torque sensor 220 of magnetic strain type is arranged in the region between the outer ring 33 of the first one-way clutch 26 and the crankshaft bearing 20R on the outer peripheral surface of the externally fitting shaft member 210. The left end of the torque sensor 220 of magnetic strain type is positioned such that its movement in the right and left thrust directions is restricted, while being in contact with the step of the externally fitting shaft member 210. Between the neighborhood of the left end of the torque sensor 220 of magnetic strain type and the outer peripheral surface of the externally fitting shaft member 210 is arranged the plane bearing 273, which is in contact with the step of the externally fitting shaft member 210. The plane bearing 273 may be replaced by a bushing.

That part of the torque sensor 220 of magnetic strain type which is close to the end of the right side is positioned such that its movement in the right and left thrust directions is restricted by the collar member 271 and the thrust washer 272 arranged at the left side of the crankshaft bearing 20R.

The torque sensor 220 of magnetic strain type is composed of two magnetic strain films 221 and 221, two detecting coils 222 and 222, and detecting circuits (not shown) connected respectively to the detecting coils 222 and 222. The magnetic strain films 221, 221 are those which are given magnetic anisotropy by Ni-Fe plating or the like. The anisotropy directions of the magnetic strain films 221, 221 are opposite to each other. They are arranged at prescribed intervals in the axial direction on the outer peripheral surface of the externally fitting shaft member 210. The detecting coils 222, 222 are arranged opposite to the magnetic strain films 221, 221.

The detecting circuit detects the change in inductance that occurs in the detecting coils 222 and 222 due to inverse magnetic strain characteristics when the magnetic strain films 221 and 221 receive torque and then it converts the detected change in inductance into the change in voltage. Finally, it sends the change in voltage as signals to the first control board 101 (mentioned later). The output from the detecting circuit causes the first control board 101 to calculate the pressing torque applied to the pedal crankshaft 17.

In this way the pressing torque induces the supplementary driving power, which is output from the brushless motor 15.

The brushless motor 15 will be described below with reference to Figs. 2 to 12.

The brushless motor 15 is a DC brushless motor driven by a DC power source. As shown in Figs. 4, 11, and 12, the brushless motor 15 is composed of a motor shaft 57, an (inner) rotor 86 fixed to the motor shaft 57, a stator 85 which surrounds the rotor 86, a yoke 75 which supports the stator 85, a magnetic pole sensor unit 250 as magnetic pole sensor means, and a motor bearing 92.

The yoke 75 is a part that holds the stator 85. It is formed from metal plates. It is composed of a second bearing retaining part 751, a recess 752, an outer peripheral part 753, a flange 754, and brackets 93.

The second bearing retaining part 751 is a part that holds the motor shaft bearing 92, which is a bearing at one end of the motor shaft 57. The motor shaft bearing 92 is a ball bearing, which rotatably supports the motor shaft 57 against the yoke 75. Between the bottom of the second bearing retaining part 751 and the motor shaft bearing 92 is arranged the wave washer 756. The wave washer 756 prevents the second bearing retaining part 751 from backlashing in the thrust direction of the motor shaft bearing 92.

The recess 752 is arranged around the second bearing retaining part 751 or around the periphery in the radial direction of the motor shaft bearing 92. The recess 752 is concave toward the right side (or opens toward the left side). The recess 752 is arranged at a position opposite to the rotor 86 of the brushless motor 15 (or at a position opposite to the rotor 86).

The peripheral part 753 is arranged in the radial direction around the recess 752.

The second bearing retaining part 751 and the peripheral part 753 may be that part of the left side of the yoke 75 in which the recess 752 is not formed.

The yoke 75 (of the brushless motor 15) is fitted into the left casing 52 by the outer part of the stator 85. To be more specific, as shown in Figs. 14 and 17, the outer part of the stator 85 is pressed into the motor placement part 523 of the left casing 52, so that the yoke 75 fixed to the stator 85 is fitted into the left casing 52.

The yoke 75 has the flange 754 which annularly extends from the right opening periphery of the yoke 75. The flange 754 extends outward in the direction (from the center of the yoke 75) perpendicular to the right and left direction of the bicycle.

As shown in Figs. 11 and 12, the brackets 93 (three pieces in this embodiment) are formed outward integrally with the flange 754. As shown in Fig. 14, the brackets 93 permit the brushless motor 15 to be fixed to the motor fixing part 526, with the brushless motor 15 arranged in the motor placement part 523 of the left casing 52 of the unit casing 50, when the bolt B93 is passed through the through-hole of the bracket 93 and tightened into the female screw 526A of the left casing 52.

The rotor 86 is composed of a plurality of permanent magnets 90 (eight pieces in this embodiment) which are arranged opposite to the stators 85. It is rotatably arranged around the motor shaft 57. There exist magnetic poles on that face of the permanent magnet 90 which is opposite to the stator 85. The magnetic poles are arranged so that the N pole and the S pole align alternately. There is a gap of certain distance between the stator 85 and the rotor 86 (permanent magnet 90).

Each of the stators 85 is constructed of the stator core 88 and the stator coil 89 wound around it. The stators 85 (12 pieces in this embodiment) are arranged along the internal periphery of the yoke 75.

The motor shaft 57 has its one end (left end) supported by the yoke 75 through the motor shaft bearing 92. The motor shaft bearing 92 at one end of the motor shaft 57 is positioned within the width of the crankshaft bearings 20R and 20L. The rotor 86 is fitted into the large portion (at the left side) of the motor shaft 57.

The motor shaft 57 has the pinion gear 58 formed at the other end (right end) thereof. The pinion gear 58 has the tooth face extending from the left side of the left casing 52 (into which the motor shaft 57 is inserted) to the rotor 86 of the brushless motor 15. The tooth face of the pinion gear 58 overlaps (in the axial direction or the right and left direction of the bicycle) with the magnet 253 of the magnetic pole sensor unit 250 attached to the motor shaft 57.

The motor shaft 57 is inserted into the left casing 52 from the outside of the unit casing 50 in such a way that the pinion gear 58 faces the inside of the right casing 51 and the left casing 52. In this state, the brushless motor 15 is fixed to the left casing 52 of the unit casing 50.

The motor shaft 57 has its another end (right end) inserted into the left casing 52 and supported by the right casing 51 through the motor shaft bearing 91 at the outer end of the pinion gear 58. In other words, the motor shaft 57 is rotatably supported by both ends.

The pedal crankshaft 17, the motor shaft 57, and the output shaft 64 have their bearings differing in capacity as mentioned in the following.

As shown in Figs. 5 and 13 to 16, the pedal crankshaft 17 is supported by the right casing 51 and the left casing 52 through the crankshaft bearings 20R and 20L, respectively.

According to this embodiment, the crankshaft bearing 20R on the right casing 51 has a larger capacity than the crankshaft bearing 20L on the left casing 52.

According to this embodiment, the motor shaft bearing 91 that supports the other end (at the side of the right casing 51) of the motor shaft 57 has a larger capacity than the motor shaft bearing 92 that supports one end (at the side of the left casing 52) of the motor shaft 57.

The output shaft 64 is supported by the right casing 51 and the left casing 52 through the output shaft bearings 68 and 69, respectively.

According to this embodiment, the output shaft bearing 68 at the right casing 51 has a larger capacity than the output shaft bearing 69 at the left casing 52.

The following is a description of the magnetic pole sensor unit 250.

As shown in Figs. 5, 14, and 15, the magnetic pole sensor unit 250 is attached to the motor shaft 57 of the brushless motor 15; it is intended to detect the turning angle of the rotor 86 of the brushless motor 15. The magnetic pole sensor unit 250 is interposed (in the axial direction of the motor shaft 57) between the pinion gear 58 and the rotor 86. The magnetic pole sensor unit 250 has the magnetic pole magnet 251 which turns together with the rotor 86 through the motor shaft 57 and the sensor 261 which detects the rotation of the magnetic pole magnet 251.

The magnetic pole magnet 251 is composed of the magnetic pole magnet proper 252, the magnet 253, the extending part 254, and the sealing member 255 as sealing means.

The magnetic pole magnet proper 252 is integrally fixed to the motor shaft 57.

The magnet 253 is placed outside the magnetic pole magnet proper 252 in the radial direction of the motor shaft 57.

The extending part 254 is a part which extends from the magnetic pole magnet proper 252 in the right direction toward the tooth face portion of the pinion gear 58. It is a cylindrical body with a smaller diameter than the magnetic pole magnet proper 252.

The magnetic pole magnet proper 252 of the magnetic pole magnet 251 comes into contact with the rotor 86 at the opposite side of the extending part 254.

The sealing member 255 is a ring-shaped part, which comes into contact with the outer periphery in the radial direction of the motor shaft 57 in the extending part 254. It is arranged in an extent smaller in diameter than the magnet 253.

The magnetic pole magnet proper 252 and the sealing member 255 are arranged beside the motor shaft 57 (in the right and left directions of the bicycle).

As shown in Fig. 10, the sensor 261 is composed of the sensor proper 262 and the Hall elements 263 placed in the sensor proper 262. As shown in Figs. 14 and 15, the sensor 261 is opposed to the magnet 253 from outside the magnetic pole magnet 251 in the radial direction of the motor shaft 57.

There are three Hall elements 263, which are arranged a certain gap apart from the magnet 253 in the radial direction of the motor shaft 57. The Hall elements 263 detect the N pole of the magnet 253 which has moved to the position opposite to the sensor 261.

The stators 85 have the stator coils 89 wound thereon. The stator coils 89 are electrically connected in a specific sequence, and they have the three-phase input terminals (not shown) for U, V, and W phases. The voltage applied to the input terminals is controlled by the second control board 102 and is supplied from the battery 13. As the input terminals receive pulsed voltage differing in phase by 120 degrees, the magnetic poles of the stators 85 are magnetized in the N and S directions alternately. The frequency of pulses determines the rate at which the magnetic poles of the stator 85 move. Thus the sensor 261 detects the position of the magnet 253 in the magnetic pole sensor unit 250. The detected position of the magnet 253 is used to adjust the pulsed voltage to be applied to the stators 85, so that the motor shaft 57 turns. The pulsed voltage to be applied to the input terminal has its pulse width controlled by PWM, so that the rotating speed of the rotor 86 (or the motor output) is controlled.

Incidentally, the sensor 261 detects the N pole of the magnet 253 which has moved to the position opposite to the sensor 261. Therefore, the number of detection is counted to calculate the revolution (revolving speed) of the motor shaft 57.

The following is a description of the structure of the second accommodation space 502.

As shown in Figs. 4 and 16, the output shaft 64 has an axis line parallel to the motor shaft 57 and is rotatably supported by the output bearings 68 and 69.

The reducing driven gear 63 meshes with the pinion gear 58, and it is joined to the output shaft 64.

The output shaft 64 and the reducing driven gear 63 may be constructed in either of two ways.

The first structure is designed such that the output shaft 64 and the reducing driven gear 63 are joined together through the second one-way clutch 65. The second structure is designed such that the output shaft 64 and the reducing driven gear 63 are joined together through the third one-way clutch 66.

Although the first structure and the second structure are contradictory to each other, they are explained below altogether for the sake of convenience. Incidentally, the output shaft 64 and the reducing driven gear 63 in the first structure are denoted by "64A" and "63A," respectively. The output shaft 64 and the reducing driven gear 63 in the second structure are denoted by "64B" and "63B," respectively.

As shown in Fig. 16, the output shaft 64 is divided into two sections by the center line CL. The section facing the rear side represents the first structure, and the section facing the front side represents the second structure.

According to the first structure, the output shaft 64A and the reducing driven gear 63A are joined together through the second one-way clutch 65 of ratchet type. The inner ring 65A of the second one-way clutch 65 is joined to the output shaft 64A. The outer ring 65B of the second one-way clutch 65 is joined to the reducing driven gear 63A. The reducing driven gear 63A is integrally formed from a hard resin material. This helps reduce weight of the gear and noise due to gear meshing.

According to the second structure, the output shaft 64B and the reducing driven gear 63B are joined together through the third one-way clutch 66 of roller type. The reducing driven gear 63B is composed of the inner peripheral part 63D (close to the output shaft 64B), which is formed from a metallic material, and the outer peripheral part 63C (close to the teeth), which is formed from a hard resin material. The inner peripheral part 63D and the outer peripheral part 63C are joined by the joining bolt B63 which is screwed into the female screw formed in the inner peripheral part 63D through the through-hole formed in the outer peripheral part 63C.

According to the first structure, the gear is integrally formed from a resin material and the resulting gear contributes to weight reduction and noise reduction due to gear meshing; however, the gear of resin material may be insufficient in strength. This disadvantage is overcome in the second structure, according to which the outer peripheral part 63C which is the major source of noise due to gear meshing is formed from a resin material and the inner peripheral part 63D which receives torque from the output shaft 64 and needs strength is formed from a metallic material. In this way, the reducing driven gear 63B as a whole achieves the object of weight reduction to a certain extent and noise reduction due to gear meshing to a full extent.

According to the first structure, the second one-way clutch 65 is a one-way clutch of ratchet type. This contributes to cost reduction. According to the second structure, the third one-way clutch 66 is formed from a one-way clutch of roller type. This contributes to reduction of rattle and noise which occurs when the output shaft 64B etc. work.

The assist sprocket 24 is joined to the neighborhood of the end extending from the right casing 51 enclosing the output shaft 64.

Rotation caused by the brushless motor 15 is transmitted to the assist sprocket 24 after reduction. When the brushless motor 15 stops or when the drive sprocket 21 runs faster than the assist sprocket 24, the one-way clutch begins to work, thereby allowing the output shaft 64 to run idle. Therefore, the pressing torque applied by the pedals 19L and 19R does not prevent the assist sprocket 24 from rotation.

On the other hand, it is also possible not to install the one-way clutch at the side of the output shaft 64B and the reducing driven gear 63. In this case, the one-way clutch may be installed at the side of the rear wheel WR, so that the same structure as mentioned above may be realized as the entire power transmitting mechanism of the power-assisted bicycle 1.

The following is a description of the structure of the third accommodation space 503.

As shown in Figs. 5, 7 and 9, the third accommodation space 503 accommodates the first control board 101 and the second control board 102, which are electrically connected to each other through cables (not shown).

The first control board 101 is a control board for the controller. It detects the pressing torque applied to the pedal crankshaft 17, thereby controlling the torque sensor 220 of magnetic strain type. It also detects the rotating angle of the rotor 86, thereby controlling the magnetic pole sensor unit 250.

The first control board 101 and the torque sensor 220 of magnetic strain type are electrically connected to each other through the cable 141 for the torque sensor. The first control board 101 and the magnetic pole sensor unit 250 are electrically connected to each other through the cable 151 for the magnetic pole sensor.

The first control board 101 is fixed to the inside of the third accommodation space forming part 519 of the right casing 51 through the boss 519A. That part of the first control board 101 which is close to the right casing 51 has the CPU 114 mounted thereon. That part of the first control board 101 which is close to the left casing 52 has the condenser 119 mounted thereon.

That part of the first control board 101 which is close to the left casing 52 has the cable 141 for the torque sensor connected thereto through the connector 142. It also has the cable 151 for the magnetic pole sensor connected thereto through the connector 152. Incidentally, Fig. 5 shows the cable 141 for the torque sensor and cable 151 for the magnetic pole sensor overlapping each other and also shows the connectors 142 and 152 overlapping each other.

The cable 141 for the torque sensor is connected to the torque sensor 220 of magnetostrictive type through the connector 143.

The cable 151 for the magnetic pole sensor goes around the outside of the left casing 52 through the through-hole 532 formed in the left casing 52, and it is electrically connected to the sensor 261 of the magnetic pole sensor unit 250.

The second control board 102 is a control board for the driver. It functions as a driver to control power supply to the brushless motor 15 in response to the angle of rotation of the rotor 86 which has been detected by the magnetic pole sensor unit 250.

The second control board 102 and the brushless motor 15 are electrically connected to each other through the cable 161 for the motor. That part of the second control board 102 which is close to the right casing 51 has the cable 161 for the motor connected thereto through the connector 162. The cable 161 for the motor goes around the outside of the left casing 52 through the through-hole 531 formed in the left casing 52, and it is electrically connected to the brushless motor 15.

The second control board 102 is fixed to the third accommodation space forming part 529 of the left casing 52 through the boss 529A. That part of the second control board 102 which is close to the left casing 52 has the FET 117 mounted thereon. That part of the second control board 102 which is close to the left casing 52 has the heat sink 113 mounted thereon. The heat sink 113 is mounted on the second control board 102 in such a way that the FET 117 is interposed between the second control board 102 and the heat sink 113.

The power-assisted bicycle 1 according to this embodiment works in the following way. When the pedals 19L and 19R are pressed down in the driving direction (or normal direction) by man power, the pedal crankshaft 17 turns. As the pedal crankshaft 17 turns, the externally fitting shaft member 210 turns through the first one-way clutch 26. As the result, the drive sprocket 21 fixed to the externally fitting shaft member 210 turns. The turning drive sprocket 21 transmits drive power to the rear wheel WR through the chain 22. The torque applied to the drive sprocket 21 is detected as the pressing force (or pressing torque) applied to the pedals 19L and 19R by the rider.

To the second control board 102 are connected the brushless motor 15 (as a load) and the battery 13 (as a power source).

On the second control board 102, the drive circuit for the brushless motor 15 is composed of the FET 117, the condenser 119, and the diode (not shown). The brushless motor 15 has its plus terminal connected to the anode of the battery 13 and its minus terminal connected to the cathode of the battery 13 through the FET 117.

The current to be supplied to the brushless motor 15 is determined by the voltage applied to the gate of the FET 117 from the CPU 114. The CPU 114 references the table for pressing torque and voltage corresponding to the pressing value and performs computations according to the prescribed operational expression, so that it acquires the voltage value corresponding to the pressing torque value and applies the thus obtained voltage to the gate of the FET 117. It is desirable to set up the table for pressing torque and voltage and the operational expression such that the output of the brushless motor 15 increases in response to increase in the pressing torque value entered into the CPU 114.

While the pedals 19L and 19R are receiving pressing torque applied by the rider, the brushless motor 15 is driven by the second control board 102, so that the supplementary torque is applied to the chain 22 through the assist sprocket 24 of the assist unit 16.

As the pressing torque applied to the pedals 19L and 19R by the rider increases, the bicycle increases in speed. When the speed exceeds a prescribed limit, the brushless motor 15 stops and the supplementary torque is not supplied to the chain 22 any longer.

The above configured embodiment achieves the following effects.

According to the embodiment, the magnetic pole sensor device 250 has the extending part 254 which extends from the magnetic pole magnet proper 252 toward the tooth surface of the pinion gear 58 and the seal member 255 which is in contact with the periphery in the axial direction of the extending part 254. This structure permits the tooth surface of the pinion gear 58 to extend without the motor shaft 57 increasing in length and also permits the magnetic pole sensor device 250 to maintain a high detecting accuracy without being affected by the lubricant (such as grease) applied to parts meshing with the pinion gear 58.

According to the embodiment, the sensor 261 faces the magnet 253 from the outside in the radial direction of the magnetic pole magnet 251. This structure allows a high degree of freedom for design even though the magnetic pole magnet proper 252 and the seal means 255 are arranged in contact with each other. This contributes to the effective use of space for the magnetic pole sensor.

As mentioned above, according to the embodiment, the magnetic pole sensor structure permits the tooth surface of the pinion gear 58 attached to the motor shaft 57 to extend, with the motor shaft 57 remaining unchanged in length, even when the brushless motor 15 increases in output (torque).

According to the embodiment, the motor shaft 57 is supported at two points at both ends thereof. This structure permits the supporting span of the motor shaft 57 to extend and the brushless motor 15 to produce a higher output (or a higher torque). Moreover, this structure obviates the necessity of arranging a bearing at the center of the motor shaft 57. This allows a high degree of freedom for the design of the magnetic pole magnet proper 252 and the seal member 255 in the magnetic pole sensor means. The result is that the tooth surface of the pinion gear can be extended.

According to the embodiment, the extending part 254 is formed in a cylindrical shape smaller in diameter than the magnetic pole magnet proper 252 and the seal member 255 is arranged within the range smaller in diameter than the magnet 253. This structure makes it unnecessary to enlarge the extending part 254 and the motor shaft 57 in the radial direction in the seal member 255.

According to the embodiment, the magnetic pole magnet 251 is in contact with the rotor 86 at the opposite side of the extending part 254. Owing to this structure, the magnetic pole magnet 251 prevents the rotor 86 from moving in the thrust direction of the motor shaft 57. This obviates the necessity of providing the rotor 86 with an additional thrust retainer.

Although one embodiment of the present invention has been explained in the foregoing, the present invention is not restricted to the embodiment but may be practiced in various forms.

For example, the brushless motor 15, which is fixed to the left casing 52 of the unit case 50 in the foregoing embodiment, may be fixed to the right casing 51.

Moreover, the pedal crankshaft 17, which is supported by the unit case 50 in the foregoing embodiment, may be supported by the body frame.

1: Power-assisted bicycle
15: Brushless motor
16: Assist unit
17: Pedal crankshaft
22: Chain
24: Assist sprocket
50: Unit case
51: Right casing
52: Left casing
57: Motor shaft
58: Pinion gear
64: Output shaft
68, 69: Output shaft bearing (bearing)
75: Motor yoke
85: Stator
86: Rotor
91, 92: Motor shaft bearing (bearing)
120: Second control board (driver means)
250: Magnetic pole sensor device (magnetic pole sensor means)
251: Magnetic pole magnet
252: Magnetic pole magnet proper
253: Magnet
254: Extending part
255: Seal member (seal means)
261: Sensor
WR: Rear wheel

## Claims

1. A magnetic pole sensor structure in an assist unit such as the assist unit (16) mounted on a power-assisted bicycle (1), said assist unit comprising a unit casing (50), a brushless motor (15) placed in the unit casing (50), a pinion gear (58) which attaches itself to the motor shaft (57) of the brushless motor (15) so as to transmit the driving force of the brushless motor (15) to the rear wheel of the power-assisted bicycle (1) through the assist unit (16), further comprising magnetic pole sensor means (250) attached to the motor shaft (57) of the brushless motor (15) to detect the angle of rotation of the rotor (86) of the brushless motor (15), and driver means (102) to control the current flowing into the brushless motor (15) according to the angle of rotation of the rotor (86) which has been detected by the magnetic pole sensor means (250), with the magnetic pole sensor means (250) being arranged between the pinion gear (58) and the rotor (86), wherein
the magnetic pole sensor means (250) comprising a magnetic pole magnet (251) which rotates integrally with the rotor (86) and a sensor (261) which detects the rotation of the magnetic pole magnet (251), the magnetic pole magnet (251) comprising a magnetic pole magnet proper (252), a magnet (253) attached to the magnetic pole magnet proper (252), an extending part (254) which extends from the magnetic pole magnet proper (252) toward the tooth surface of the pinion gear (58), and seal means (255) which is in contact with the periphery in the radial direction of the extending part (254),
the sensor (261) faces the magnet (253) from the outside in the radial direction of the magnetic pole magnet (251), and
the magnetic pole sensor means (250) is arranged such that the magnetic pole magnet proper (252) and the seal means (255) are close to each other in the axial direction of the motor shaft (57).

2. The magnetic pole sensor structure in an assist unit as defined in Claim 1, wherein the motor shaft (57) is supported at two points such that one end is supported by the motor yoke (75) to hold the stator (85) of the brushless motor (15), with the bearing (92) interposed between them, and the other end is supported by the unit casing (50) at the position of the outer end of the pinion gear (58).

3. The magnetic pole sensor structure in an assist unit as defined in Claim 1 or 2, wherein the extending part (254) is formed in a cylindrical shape smaller in diameter than the magnetic pole magnet proper (252) and the seal means (255) is arranged within the range smaller in diameter than the magnet (253).

4. The magnetic pole sensor structure in an assist unit as defined in any of claims 1 to 3, wherein the magnetic pole magnet (251) is in contact with the rotor (86) at the opposite side of the extending part (254).

## Patentansprüche

1. Sensorkonstruktion für einen magnetischen Pol in einer Unterstützungseinheit, wobei die Unterstützungseinheit (16) an einem kraftunterstützten Fahrrad (1) montiert ist, wobei die Unterstützungseinheit umfasst:
ein Einheiten-Gehäuse (50), einen bürstenlosen Motor (15), der in dem Einheiten-Gehäuse (50) platziert ist,
ein Ritzel (58), welches an der Motorwelle (57) des bürstenlosen Motors so befestigt ist, dass es die Antriebskraft des bürstenlosen Motors (15) an das Hinterrad des kraftunterstützten Fahrrads (1) übermittelt durch die Assistenzeinheit (16), weiterhin aufweisend
Sensormittel (250) für einen Magnetpol, wobei die Sensormittel (250) an der Motorwelle (57) des bürstenlosen Motors (15) angebracht sind, um einen Drehwinkel des Rotors (86) des bürstenlosen Motors (15) zu erfassen, und Antriebsmittel (102) um den Strom, der in den bürstenlosen Motor (15) fließt, gemäß dem Drehwinkel des Rotors (86), der durch die Sensormittel (250) für den Magnetpol erfasst wurde, zu steuern, wobei die Sensormittel (250) des Magnetpols zwischen dem Ritzel (58) und dem Rotor (86) angeordnet sind, wobei die Sensormittel des Magnetpols (250) einen Magnetpolmagneten (251) umfassen, der gemeinsam mit dem Rotor (68) rotiert und einen Sensor (261), der die Rotation des Magnetpolmagneten (251) erfasst, wobei der Magnetpolmagnet (251) ein Magnetpolmagneten-Innenteil (252), einen Magneten (253), der an dem Magnetpolmagneten-Innenteil (252) befestigt ist, einen sich erstreckenden Teil (254), der sich von dem Magnetpolmagneten-Innenteil (252) auf die Zahnfläche des Ritzels (258) zu erstreckt, und Dichtmittel (255) aufweist, welche in Kontakt mit der Umgebung in der radialen Richtung des sich erstreckenden Teils (254) ist, wobei der Sensor (261) dem Magneten (253) von der Außenseite in der radialen Richtung des Magnetpolmagneten (251) orientiert ist und die Sensormittel (250) für den Magnetpol so angeordnet sind, dass das Magnetpolmagneten-Innenteil (252) und die Dichtmittel (255) nah beieinander in der axialen Richtung der Motorwelle (57) sind.

2. Sensorkonstruktion für einen Magnetpol in einer Unterstützungseinheit, wie sie in Anspruch 1 definiert ist, wobei die Motorwelle (57) an zwei Punkten getragen wird, sodass ein Ende durch das Motorjoch (75) gehalten wird, um den Stator (85) des bürstenlosen Motors (15) zu halten, wobei das Lager (92) dazwischen angeordnet ist, und das andere Ende durch das Einheiten-Gehäuse (50) an einer Position an dem äußeren Ende des Ritzels (58) getragen wird.

3. Sensorkonstruktion für einen Magnetpol in einer Unterstützungseinheit, wie sie in Anspruch 1 oder 2 definiert ist, wobei der sich erstreckende Teil (254) in einer zylindrischen Form gebildet ist, die hinsichtlich des Durchmessers kleiner ist als das Magnetpolmagneten-Innenteil (252) und das Dichtmittel (255) innerhalb des Bereichs angeordnet ist, der hinsichtlich des Durchmessers kleiner ist als der Magnet.

4. Sensorkonstruktion für einen Magnetpol in einer Unterstützungseinheit, wie sie in einem der Ansprüche 1 bis 3 definiert ist, wobei der Magnetpolmagnet (251) mit dem Rotor (86) an der gegenüberliegenden Seite des sich erstreckenden Teils (254) in Kontakt ist.

## Revendications

1. Structure de détection de pôle magnétique dans une unité d'assistance telle que l'unité d'assistance (16) montée sur un vélo à assistance électrique (1), ladite unité d'assistance comprenant une enceinte d'unité (50), un moteur sans balais (15) placé dans l'enceinte d'unité (50), un pignon d'engrenage (58) qui se fixe sur l'arbre moteur (57) du moteur sans balais (15) de façon à transmettre la force d'entraînement du moteur sans balais (15) à la roue arrière du vélo à assistance électrique (1) par le biais de l'unité d'assistance (16), comprenant en outre un moyen de détection de pôle magnétique (250) relié à l'arbre moteur (57) du moteur sans balais (15) afin de détecter l'angle de rotation du rotor (86) du moteur sans balais (15), et un moyen d'entraînement (102) destiné à réguler le courant circulant dans le moteur sans balais (15) selon l'angle de rotation du rotor (86) qui a été détecté par le moyen de détection de pôle magnétique (250), le moyen de détection de pôle magnétique (250) étant placé entre le pignon d'engrenage (58) et le rotor (86), dans lequel le moyen de détection de pôle magnétique (250) comprend un aimant à pôle magnétique (251) qui tourne intégralement avec le rotor (86), et un capteur (261) qui détecte la rotation de l'aimant à pôle magnétique (251), l'aimant à pôle magnétique (251) comprenant un aimant à pôle magnétique (252), un aimant (253) relié à l'aimant à pôle magnétique (252), une partie en extension (254) qui s'étend depuis l'aimant à pôle magnétique (252) vers la surface dentée du pignon d'engrenage (58), et un moyen d'étanchéité (255) qui est en contact avec la périphérie dans la direction radiale de la partie en extension (254), le capteur (261) faisant face à l'aimant (253), depuis l'extérieur, dans la direction radiale de l'aimant à pôle magnétique (251), et le moyen de détection de pôle magnétique (250) étant prévu de sorte que l'aimant à pôle magnétique (252) et le moyen d'étanchéité (255) soient proches l'un de l'autre dans la direction axiale de l'arbre moteur (57).

2. Structure de détection de pôle magnétique dans une unité d'assistance selon la revendication 1, dans laquelle l'arbre moteur (57) est supporté en deux points de sorte qu'une extrémité soit supportée par la culasse du moteur (75) afin de maintenir le stator (85) du moteur sans balais (15), avec le palier (92) interposé entre ceux-ci, et l'autre extrémité soit supportée par l'enceinte d'unité (50) au niveau de l'extrémité extérieure du pignon d'engrenage (58).

3. Structure de détection de pôle magnétique dans une unité d'assistance selon la revendication 1 ou 2, dans laquelle la partie en extension (254) est de forme cylindrique, avec un diamètre inférieur à l'aimant à pôle magnétique (252), et le moyen d'étanchéité (255) possède un diamètre inférieur à l'aimant (253).

4. Structure de détection de pôle magnétique dans une unité d'assistance selon l'une quelconque des revendications 1 à 3, dans lequel l'aimant à pôle magnétique (251) est en contact avec le rotor (86) au niveau du côté opposé de la partie en extension (254).
